Europäisches Patentamt

European Patent Office

Office européen des brevets

(19)

(11) Veröffentlichungsnummer: **0 276 390 B1**

# (12) EUROPÄISCHE PATENTSCHRIFT

(45) Veröffentlichungstag der Patentschrift: **26.02.92**

(21) Anmeldenummer: **87116788.8**

(22) Anmeldetag: **13.11.87**

(51) Int. Cl.⁵: **B29C 45/00**, B29C 45/60, B29C 45/58

(54) **Direktverarbeitung von Polymer mit pulverförmigen Additiven in Spritzgiessmaschinen.**

(30) Priorität: **27.01.87 DE 3702348**

(43) Veröffentlichungstag der Anmeldung:
**03.08.88 Patentblatt 88/31**

(45) Bekanntmachung des Hinweises auf die
Patenterteilung:
**26.02.92 Patentblatt 92/09**

(84) Benannte Vertragsstaaten:
**AT BE CH DE ES FR GB IT LI NL SE**

(56) Entgegenhaltungen:
EP-A- 0 025 825        EP-A- 0 069 271
DE-A- 1 954 287        DE-A- 2 027 910
DE-A- 2 840 478        GB-A- 1 597 770

JAPAN PLASTICS AGE, Band 12, Nr. 5, Mai
1974, Seiten 21-28; Y. SHIMA: "Injection molding machine equipped with blend feeder"

(73) Patentinhaber: **Plüss-Staufer AG**

**CH-4665 Oftringen(CH)**

(72) Erfinder: **Schlumpf, Hans-Peter**
**Bergliweg 8**
**CH-4665 Oftringen(CH)**
Erfinder: **Pfister, Hans Jörg**
**Grenzstrasse 4**
**CH-4800 Zofingen(CH)**
Erfinder: **Ochsner, Edwin**
**Kührainweg**
**CH-4803 Vordemwald(CH)**

(74) Vertreter: **Reinhard, Skuhra, Weise**
**Friedrichstrasse 31**
**W-8000 München 40(DE)**

EP 0 276 390 B1

**Beschreibung**

Die Erfindung betrifft ein Verfahren zur Verarbeitung von granulat- und/oder pulverförmigem Polymer mit pulverförmigen Additiven in einer Spritzgießmaschine gemäß dem Oberbegriff des Patentanspruchs 1 sowie eine Schnecke für eine Spritzgießmaschine gemäß dem Oberbegriff des Patentanspruchs 8.

Spritzgießmaschinen zur Verarbeitung von Thermoplasten sind überwiegend mit Einzelschnecken ausgerüstet. In Spritzgießmaschinen sind in einem für die Schnecken vorgesehenen Zylinder Heizvorrichtungen eingebaut, die zusammen mit der Schnecke zum Erwärmen, Aufschmelzen und Homogenisieren des Polymermaterials beim Transport der aufgeschmolzenen Polymermasse in eine mit einem beweglichen Spritzgießteil verbundene Spritzform dient. Bei thermoplastischen Polymeren, wie beispielsweise Polyethylen, Polypropylen, Polystyrol, Polyamiden, gesättigten Polyestern, ABS, SAN, fluorhaltigen Polymeren, Polycarbonat, Acetalharzen usw. wird überwiegend von Polymergranulat ausgegangen. Die Verarbeitung von pulverförmigen Thermoplasten findet im Spritzgießverfahren nur wenig Anwendung, beispielsweise bei Hart-PVC.

Die Erfindung zielt auf das direkte Verarbeiten von granulat-und/oder pulverförmigem Polymer mit pulverförmigen Additiven zu Kunststoffteilen mit einwandfreier Additivdispergierung ab. Unter diesen Additiven sind Zusätze wie Mineralfüllstoffe (Calciumcarbonat, Talk, Glaskugeln, Glimmer, Wollastonit, Dolomit, Kaolin, Feldspäte, Silikate, natürliche und synthetische Silica, Gips), Metalloxide, Metallpulver, Pigmente (Titandioxid, anorganische und organische Pigmente, etc.), Flammschutzmittel (Aluminiumtrihydrat, Magnesiumhydroxid, Magnesiumcarbonat, Arsentrioxid, etc.) und ähnliche anorganische oder organische feste Produkte zu verstehen, die in der Polymerschmelze beim Spritzgießvorgang unlöslich sind. Derartige Zusätze müssen bisher zunächst durch ein teures und aufwendiges Compoundier- oder Masterbatchherstellungsverfahren vor Spritzgießanwendung in eine redispergierbare Granulatform überführt werden. Dabei ist es üblich, die Zusätze zusammen mit einer Polymer- oder Wachsmatrix bei Füllgraden bis zu 75 Gew.-% (z.B. 75 Gew.-% Füllstoff und 25 Gew.-% Trägerpolymer) in Innenmischern (Typ Banbury), Doppelschneckenextrudern mit Knetelementen (z.B. Typ ZSK der Fa. Werner + Pfleiderer, Stuttgart) oder Spezialknetern (z.B. Ko-Kneter der Buss AG, CH-4133 Pratteln) homogen miteinander zu verkneten. Anschließend wird die gefüllte Schmelze durch einen Granuliervorgang granuliert.

Da die oben erwähnten Additive in Spritzgießmaschinen bisher nur in compoundierter Form oder als Masterbatch mit den Thermoplastgranulaten einwandfrei verarbeitet werden können, verteuerte der sowohl hinsichtlich der Investition als auch hinsichtlich des Energiebedarfs aufwendige Zwischenschritt der Compoundierung der Additive oder die meist etwas billigere Masterbatchherstellung mit höherem Füllgrad den Volumenpreis der wichtigsten Massenpolymere wie LDPE, HDPE, LLDPE, PP oder Polystyrol bei Zugabe der mengenmäßig wichtigsten Mineralfüllstoffe wie Calciumcarbonat, Talk und Glimmer. Da Spritzgießteile immer Volumina darstellen, sind nur die Volumenpreise und nicht die Gewichtspreis von reinem Polymer mit den Füllstoffcompounds oder -masterbatches zu vergleichen. Daher können Mineralfüllstoffe in den oben erwähnten Massenpolymeren nach dem Stand der Technik keine Verbilligung des Volumenpreises erbringen, solange sie nicht direkt ohne vorherige Compoundierung verarbeitbar sind.

Aus dem Stand der Technik sind kein Druckschriften bekannt, die sich mit der direkten Einarbeitung der oben erwähnten pulverförmigen Zusätze befassen. Aus der DE-PS 27 08 200 sind statische Mischer bekannt, die im Anschluß an die Spritzgießschnecke, also zwischen Schneckenspitze und Spritzform eingebaut werden und primär der Temperatur- und Farbhomogenisierung der Polymerschmelze dienen, jedoch keine festen Additive zu dispergieren vermögen.

In der DE-PS 28 38 516 ist ein Mischdorn zwischen Schneckenspitze und Spritzform offenbart, welcher vollständig in der Spritzdüse angeordnet ist und zur Farbhomogenisierung der Schmelze dient. In der DE-PS 858 310 ist ein ähnlicher Mischdorn beschrieben. Eine Rückstromsperre mit Mischerfunktion ist in G. Menges, W. Elbe : Plastverarbeiter 24 (1973) S. 137 offenbart. Bei den genannten Lösungen werden immer Zusatzeinrichtungen zu anderen Zwecken verwendet, ohne daß eine Veränderung an der Schnecke der Spritzgießmaschine vorgenommen wird.

Die US-Patente 4 285 600 und 4 363 768 beschreiben allgemein eine Mehrkanalschnecke mit verschiedenen Gangtiefen zur Verbesserung der Temperaturkonstanz der Schmelze und zur Verbesserung der Dispergierung von Additiven.

Aus der DE-OS 28 40 478 ist es ferner bekannt, eine Verarbeitung von Materialien mit unterschiedlicher Schmelztemperatur in einer Spritzgießmaschine ohne Aufbereitung in einem Compoundiervorgang durch Änderung der Schneckengeometrie vorzunehmen, wobei in Knet-und Mischzonen der wendelförmige Schneckenkanal mit konstantem Schneckenkerndurchmesser ersetzt ist durch im wesentlichen in Achsrichtung der Schnecke verlaufende Längskanäle, die untereinander durch Ringkanäle verbunden sind. Als nachteilig ist es bei den aus den vorgenannten Druckschriften entnehmbaren Verfahren anzusehen, daß diese nach dem Prinzip der immer besseren Auswalzung von immer dünneren Schichten der Polymerschmelze arbeiten, um Additive in der Schmelze zu desagglomerieren und zu dispergieren, was jedoch hinsichtlich eines ausreichenden Dispergierungsgrades und einer wirtschaftlichen Durchführung des Verfahrens unbefriedigend ist. Nachteilig ist an den bisherigen Lösungen ferner, daß bisher bekannte Schneckenmodifikationen, die zu dem vorgenannten Zweck eingesetzt werden sollen, stets den Bau einer entsprechend hinsichtlich der Schneckenzylinderlänge angepaßten Spritzgießmaschine erfordern.

Der Erfindung liegt die Aufgabe zugrunde, ein Verfahren und eine Schnecke der eingangs genannten Art verfügbar zu machen, mit dem granulat- und/oder pulverförmiges Polymer besonders wirtschaftlich mit pulverförmigen Additiven zu qualitativ hochwertigen Spritzlingen verarbeitet werden können.

Erfindungsgemäß wird diese Aufgabe durch die im Patentanspruch 1 sowie die im Patentanspruch 8 genannten Merkmale gelöst. Bevorzugte Merkmale, die die Erfindung vorteilhaft weiterbilden, sind in den jeweils nachgeordneten Patentansprüchen genannt.

Mit den erfindungsgemäßen Maßnahmen wird in vorteilhafter Weise der Effekt ausgenutzt, daß sich in einem speziellen Fließvorgang die sich in der Schmelze befindlichen nicht dispergierten Additivagglomerate mit ihrer relativ großen Masse stärker beschleunigen lassen als die Polymermatrixschmelze selbst. Hierbei zerbrechen die Additivagglomerate durch Einflüsse wie die Beschleunigungskraft, das Auftreffen auf die Schneckenzylinderwand, das Auftreffen auf die Schnecken- bzw. die Mischerelementoberfläche, das Auftreffen auf andere Agglomerate sowie die nochmalige Beschleunigung durch eine weitere Mischerelementanordnung. Hierdurch können die pulverförmigen Additive direkt ohne ein vorher erforderliches Compoundier- oder Masterbatchverfahren in der Polymerschmelze dispergiert werden. Dies ist wirtschaftlich nicht nur im Hinblick auf die geringeren Verarbeitungskosten, sondern auch deshalb günstig, weil vorteilhaft die direkte Verarbeitung in einer vorhandenen Spritzgießmaschine ohne größeren Umrüstungsaufwand nach Austausch der herkömmlichen Schnecke durch die erfindungsgemäße Schnecke vorgenommen werden kann.

Der Aufbau der bevorzugt aus Ringsegmentabschnitten bestehenden Mischerelementgruppen, die Anzahl der Ringsegmentabschnitte sowie die Entfernung der Mischelementanordnungen von einem zur Einzugszone der Schnecke offenen Einfüllstützen, die Differenz zwischen den äußeren Durchmessern der Mischerelemente und dem Durchmesser des Schneckenkerns wird vorteilhaft den jeweils gewünschten Bedingungen wie Polymertyp, Additivtyp, Additivkonzentration, Durchsatzhöhe, Durchmesser der Schnecke, Länge der Schnecke sowie der maximalen Leistung des Schneckenantriebs angepaßt.

Die Länge der erfindungsgemäßen Schnecke beträgt mindestens das 19-fache, vorzugsweise das 20-fache des Schneckendurchmessers, wobei die minimale Umfangsgeschwindigkeit der Schnecke vorzugweise 150 mm/sec. beträgt, wobei bei steigender Umfangsgeschwindigkeit die Dispergierung der Additive verbessert wird, weil das Beschleunigen der mit Additivagglomerat gefüllten Schmelze an den Kanten der Ringsegmentabschnitte in Drehrichtung der Schnecke erfolgt. Als günstig hat sich für eine genügende Dispergierung herausgestellt, wenn der Schneckendurchmesser mindestens 30 mm beträgt.

Vorteilhaft konnte durch Versuche beispielsweise mit einer erfindungsgemäßen Schnecke mit einem Durchmesser von 70 mm und einer Länge von 25D bis 40% pulverförmiges, oberflächenbeschichtetes Calciumcarbonat (Omyalite 90 T) mit HDPE- oder PP-Granulat verarbeitet werden.

Weitere Einzelheiten, Merkmale und Vorteile der Erfindung sind dem anschließenden Beschreibungsteil zu entnehmen, in dem die Erfindung unter Bezugnahme auf die beigefügten Zeichnungen, Diagramme und Mikroskopaufnahmen und Erläuterung von Verfahren zur Prüfung des erzielten Dispergierungsgrades näher beschrieben wird.

Es zeigen :

Figur 1     eine schematisierte Seitenansicht eines Ausführungsbeispiels einer Schnecke gemäß der Erfindung;

Figur 2     einen Schnitt entlang der Schnittlinie II-II in Fig. 1;

Figur 3     einen Teilschnitt entlang der Schnittlinie III-III in Fig. 1;

Figur 4     eine Rasterelektronenmikroskopieaufnahme einer aus gespritzten Prüfkörpern herausgeschnittenen Probe in einer 1600-fachen Vergrößerung, hergestellt aus der Abmischung eines handelsüblichen Calciumcarbonat/HDPE-Masterbatch-Granulates, mit reinem HDPE-Granulat unter Verwendung einer üblichen Spritzgießschnecke;

Figur 5     eine Lichtmikroskopieaufnahme von gespritzten Prüfkörpern aus den gleichen Spritzgießtiefen und den gleichen Materialien und Verfahren wie in Figur 4 angegeben;

Figur 6     ein durch den Bildanalysator erstelltes Histogramm der in Figur 5 dargestellten Lichtmikroskopieaufnahme, um den Volumenanteil der Füllstoffteilchen bzw. Füllstoffagglomerate als Funktion des Teilchens- bzw. Agglomeratdurchmessers darzustellen;

Figur 7     eine Rasterelektronenaufnahme wie Figur 4 jedoch durch Abmischung des pulverförmigen Additives mit HDPE-Granulat unter Verwendung einer erfindungsgemäß ausgebildeten Schnecke;

Figur 8 eine Lichtmikroskopieaufnahme wie Fig. 5 jedoch für ein entsprechendes Spritzgießen durch Abmischen des pulverförmigen Additives mit HDPE-Granulat unter Verwendung einer erfindungsgemäß ausgebildeten Schnekke; und

Figur 9 ein Bild wie Figur 6, jedoch für ein entsprechendes Spritzgießen durch Abmischen des pulverförmigen Additives mit HDPE-Granulat unter Verwendung einer erfindungsgemäß ausgebildeten Schnecke.

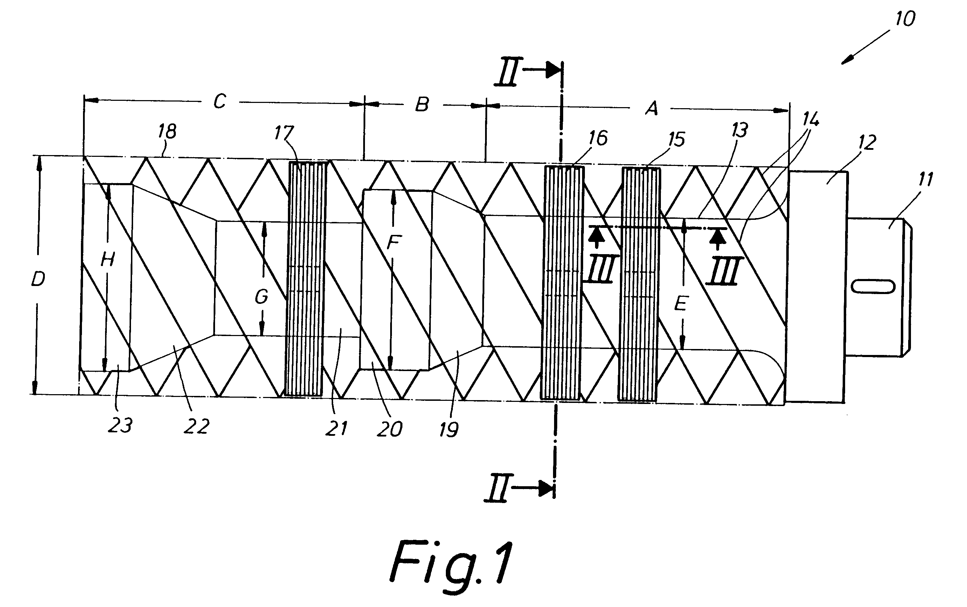

In Figur 1 ist schematisch eine Ausbildungsform einer Schnecke 10 gemäß der Erfindung dargestellt, die einen Antriebsschaft 11 besitzt, der in einen Schneckenflansch 12 übergeht. An den Schneckenflansch 12 schließt sich der Arbeitsbereich der Schnecke 10 mit einer Arbeitslänge L an, der aus einer Einzugszone A, einer Zwischenzone B und einer Ausstoßzone C besteht. Die Schnecke 10 besitzt einen Schneckenkerns 13, dem ein schematisiert dargestellter wendelförmiger Schneckensteg 14 angeformt ist. Die Schnecke 10 weist weiterhin zwei Mischelementanordnungen 15 und 16 in der Einzugszone A und eine Mischelementanordnung 17 in der Ausstoßzone C auf. Eine Schneckenspitze, die an dem dem Antriebsschaft 11 gegenüberliegenden Ende der Schnecke 10 vorgesehen ist, sowie eine Spritzgießform sind zur Vereinfachung der Darstellung ebenso weggelassen worden wie übliche Antriebsmittel für die Schnecke.

In Fig. 1 ist gestrichelt ein Schneckenzylinder 18 einer nicht dargestellten Spritzgießmaschine angedeutet, in dem die Schnecke 10 rotiert. Die Schnecke 10 besitzt einen Durchmesser D. Ihre Arbeitslänge L beträgt 20 D. Der Schneckenkern 13 hat in der Einzugszone A bis auf einen Bereich nahe dem Schneckenflansch 12 einen konstanten Durchmesser E. Die Länge der Einzugszone A beträgt das 11-fache des Schneckendurchmessers D.

Die Mischelementanordnungen 15, 16 und 17 haben jeweils eine Breite, die dem doppelten Durchmesser D der Schnecke 10 entspricht. Der Abstand zwischen den Mischelementanorndungen 15 und 16 hat die Größe des Schneckendurchmessers D. Von dem linksseitigen Ende der in Fig. 1 dargestellten Schnecke 10 ist die Mischelementanordnung 16 um das 10,5-fache des Schneckendurchmessers D entfernt. Die entsprechende Entfernung für die Mischelementanordnung 15 beträgt das 13,5-fache des Schneckendurchmessers D.

Die Zwischenzone B hat eine Länge, die dem 3-fachen des Schnekkendurchmesser D entspricht. Der Durchmesser E des Kerns 13 nimmt in einem Verdichtungsabschnitt 19 bis zu einem Durchmesser F zu , der einen Meteringabschnitt 20 festlegt. Der Durchmesser F ist etwa 1/3 größer als der Durchmesser E.

Zu Beginn der Ausstoßzone C hat der Kern 13 in einem Entspannungsabschnitt 1 einen Durchmesser G, welcher kleiner ist als der Durchmesser E. Die Mischelementanordnung 17 ist in diesem Entspannungsabschnitt 21 mit einem Abstand zu der Zwischenzone B angeordnet, der dem Schneckendurchmesser D entspricht. Der Abstand der Mischelementanordnung 17 zu dem dem Antriebsschacht 11 gegenüberliegenden Ende der dargestellten Schnecke 10 entspricht dem 3-fachen des Schneckendurchmessers D. In diesem Abstand befindet sich ein Teil des Entspannungsabschnitts 21, ein weiterer Verdichtungsabschnitt 22 sowie ein weiterer Meteringabschnitt 23 mit einem Durchmesser H, welcher größer ist als der Durchmesser F des Meteringabschnitts 20.

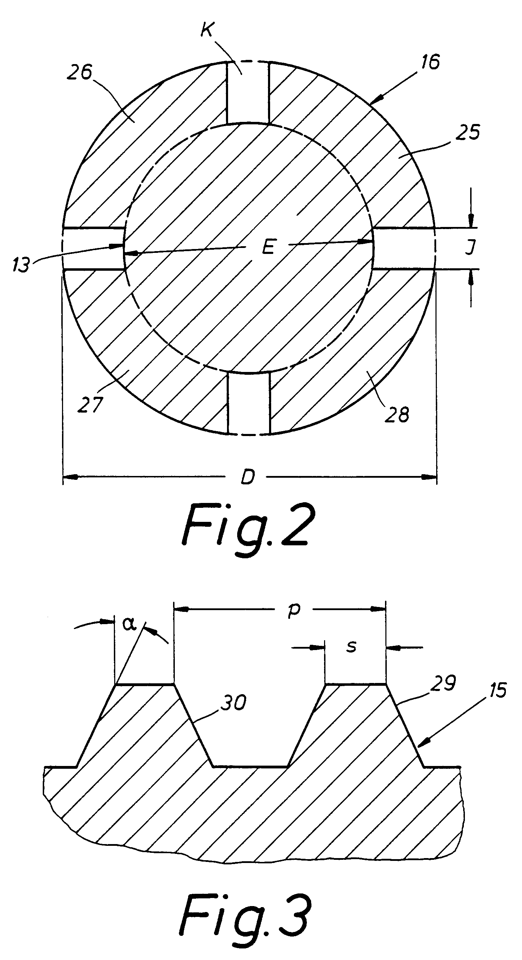

Figur 2 zeigt einen Schnitt durch die Mischelementanordnung 16. Die Mischelementanordnung1 16 ist aus vier Ringsegmentabschnitten 25 - 28 zusammengesetzt, die an den Schneckenkern 13 angeformt sind. Die Ringsegmentabschnitte sind in insgesamt fünf Gruppen parallel zueinander senkrecht zur Längsachse der Schnecke angeordnet, können jedoch abweichend wendelförmig vorgesehen sein. Die Ringsegmente 25 - 28, die eine Gruppe der Mischelementanordnung 16 bilden, sind derart auf dem Kern 13 der Schnecke 10 angeordnet, daß zwischen zwei benachbarten Ringsegmentabschnitten ein konstanter Abstand I vorliegt. Die durch diese Beabstandung geschaffene Durchlaßfläche ist in Fig. 2 mit dem Buchstaben K bezeichnet. Fig. 3 zeigt einen Teilschnitt durch zwei Gruppen der Mischelementanordnung 15. Erkennbar ist der symmetrische Profilaufbau der Ringsegmentabschnitte 29 und 30, die in Längsrichtung der Schnecke 10 beabstandet voneinander angeordnet sind. Das Profil der Ringsegmentabschnitte 29, 30 hat einen trapezförmigen Aufbau mit einem spitzen Winkel $\alpha$, der etwa 15° beträgt. Die Breite jedes Ringsegmentabschnitts 19 bzw. 30 im Bereich der Anlage an dem Schneckenzylinder 18 ist mit s bezeichnet und betragt beispielsweise 2 mm. Der Abstand p zwischen den Ringsegmentabschnitten 29 und 30 beträgt beispielsweise 10 mm.

Die Summe der Durchlaßflächen K bei einer Gruppe einer Mischelementanordnung ist so dimensioniert, daß sie größer ist als die senkrecht zwischen zwei benachbarten Schneckenstegen 14 verlaufende Querschnittsfläche, die für den Durchsatz des Gemisches zur Verfügung steht. Die Summe der Flächen K ist vorzugsweise bis zu dem Faktor 1,5 größer als die zuletzt genannte Fläche. Hierdurch lassen sich Strömungsverhältnisse im Bereich der Mischelementanordnungen herstellen, die ein besonders wirksames

4

Dispergieren bewirken.

Nach dem Einfüllen von Polymergranulat und pulverförmigen Additiven in die Einzugszone A erfolgt ein Beschleunigen der mit Additivagglomeraten gefüllten Schmelze mit den Kanten der Ringsegmentabschnitte, die die Durchlaßfläche K seitlich begrenzen, in Drehrichtung der Schnecke. Bei steigender Umfangsgeschwindigkeit der Ringsegmentabschnittkanten wird naturgemäß die Dispergierung der Additive verbessert. D.h., daß das Verfahren erst ab Schneckendurchmessern D von 30 mm eine genügende Dispergierung ergibt.

Die maximale Anzahl von Ringsegmentabschnitten pro Gruppe einer Mischelementanordnung wird durch die Festigkeitseigenschaften im Übergang zum Schneckenkern bestimmt. Beispielsweise muß bei einer Schnecke mit 30 mm Durchmesser und einer Ringsegmentdicke von 5 mm der Fußdurchmesser der Ringsegmente mindestens 4 mm betragen, um die auftretenden Kräfte aufnehmen zu können. Die Höhe der Ringsegmentabschnitte bzw. der Restdurchmesser des Schneckenkerns wird durch die gewünschte Förderwirkßung der Schnecke bestimmt. Die Dicke der Ringsegmentabschnitte hängt von den auftretenden Kräften ab. Sie beträgt beispielsweise 4 - 5 mm bei einem Schneckendurchmesser D von 30 mm und 10 mm bei einem Schneckendurchmesser von D = 70 mm.

Als vorteilhaft hat sich in der Praxis ergeben, daß die beste Additivdispergierung je nach Durchmesser der Schnecke erzielt wird, wenn mindestens 15 Ringsegmentgruppen in drei Mischelementanordnungen 15, 16 und 17 auf der Spritzgießschnecke 10 angebracht werden. Die minimale Umfangsgeschwindigkeit der Schnecke beträgt 155 mm/s.

Die Additivdispegierung in dem Polymer läßt sich nach den folgenden drei Verfahren überprüfen:

A. Prüfung mit dem Rasterelektronenmikroskop (REM)

Aus den Spritzgießteilen wurden Proben von 5 mm Länge geschnitten in Kunstharz gebettet und nach dem Aushärten mit Siliziumcarbid Abstufung 120, 220, 400, 600 und 1000 bei 300 U/min geschliffen. Ein Polieren erfolgt mit Diamant 6$\mu$m, 3$\mu$m und 1$\mu$m, auf hartem Tuch mit Schmiermittel Struers blau (Alkohol plus Mineralöl). Nach Bombardierung der Oberfläche mittels Argonionen (Druck 3 mb, Strom 50 mA, 1200 V für 6 min) wird die Oberfläche mit Gold bedeckt. Die Rem-Aufnahmen erfolgen mit Rückstreuelektronen von 20 keV.

B. Überprüfung mit einem optischen Mikroskop mit Bildanalysator

Die Probenherstellung erfolgt wie bei A. bis einschließlich der Polierung mit Diamant. Im Reflexionslicht unterscheiden sich die Füllstoffteilchen (z.B. Calciumcarbonat) im Grauton von der Polymermatrix (z.B. HDPE). Durch ein Bildanalysator (Optomax IV Image Analyser der Micromeasurements Ltd., GB-Leeds) kann mit einem speziellen Computerprogramm direkt die Größe der Additivagglomerate ausgedrückt in Volumen-% erhalten werden.

C. Überprüfung mittels Extrusion durch ein Siebpaket

Hersteller von Pigmenten (z.B. Titandioxid) - oder Füllstoffkonzentraten prüfen den erhaltenen Dispersionsgrad im Endprodukt mittels Extrusion durch ein Siebpaket mit definierten Maschenweiten (K. Wolny: Verteilung von Titandioxid-Pigmenten in Kunststoffen in "Kunststoffe" 70 (1980) 6, S. 352). Dabei wird entweder die Menge extrudierbares Konzentrat bis zur Erreichung eines bestimmten Massendruckes vor dem Siebpaket (Aufbau von nichtdispergierten Pigmentagglomeraten auf dem Siebpaket) oder der Siebrückstand nach Extrusion einer vorgegebenen Menge Pigmentkonzentrat bestimmt. Je geringer dieser Siebrückstand ist, umso besser ist die Pigment- oder Füllstoffdispergierung im Konzentrat.

Das Verfahren des Siebrückstandes auf einem Siebpaket von 4 Sieben mit Maschenweiten in Fließrichtung der Polymerschmelze von 400 $\mu$m, 100 $\mu$m, 25 $\mu$m und 10 $\mu$m, eingesetzt in einen Siebwechsler der Fa. Falzoni, I-44012 Bondeno, wurde als weitere Methode zur Überprüfung des mit der neuen Schnecke erzielbaren Dispersionsgrades benützt. Die mit einer üblichen Mischschnecke, einer Standard-Spritzgießschnecke und der erfindungsgemäßen Spritzgießschnecke hergestellten, gefüllten Teile wurden granuliert und mittels eines Labor-Extrusionsmeters (Fa. Göttfert Werkstoff-Prüfmaschinen GmbH, D-6967 Buchen) durch das erwähnte Siebpaket extrudiert.

Die Versuchsbedingungen lauteten dabei :
- Gangtiefenverhältnis der Extrusionsschnecke       : 1:2
- Drehzahl der Extrusionsschnecke            : 75 UpM
- Flachdüse           : 2 mm $\times$ 10 mm

- Massetemperatur vor dem Siebpaket für HDPE     : 200 ° C
- Massetemperatur vor dem Siebpaket für PP      : 230 ° C
- Additivmenge          : 1000 g

Das Siebpaket wurde zuerst gewogen, in den Laborextruder eingebaut und mit reiner Polymerschmelze gespült. Anschließend extrudiert man eine vorgegebene Menge enthaltend total 1'000 g Additiv der granulierten, gefüllten Spritzgießteile durch das Siebpaket und bestimmt nach dem Ausglühen (2 h bei 600 ° C) den auf dem Siebpaket aus der Schmelze ausfiltrierten Rückstand an Additiven.

In den anschließenden Beispielen 1 - 4 wurden unter wenigstens teilweiser Verwendung der vorgenannten Prüfungsverfahren Additivdispergierungen nach dem Spritzgießen untersucht, die nach vorbekannten Verfahren erreicht worden sind.

Beispiel 1:

Verarbeitung von pulverförmigem Calciumcarbonatfüllstoff mit HDPE-granulat mittels einer üblichen Mischschnecke.

Es wurde Calciumcarbonatfüllstoff (CaCO$_3$) mit mittlerem statistischen Teilchendurchmesser von 3,0 μm (Millicarb) der Plüss-Staufer AG, CH-4665 Oftringen mit einem Füllgrad von 20 Gew.-% HDPE mit 80 Gew.-% Hostalen GC 7260-Granulat (Hoechst AG) in einem Taumelmischer für 30 min vorgemischt und auf einer handelsüblichen Spritzgießmaschine verarbeitet. Es handelt sich um eine Maschine Netstal 300 RE der Fa. Netstal-Maschinenfabrik AG in CH-8754 Netstal. Verwendet wurde dabei eine Mischschnecke mit einem Durchmesser D von 45 mm und einer Gesamtlänge von 25 D = 1125 mm. Die Schnecke besaß eine Einzugszone der Länge 20 D mit einem eingängigen Schneckengang und einer konstanten 2 mm-Gangtiefe, eine sich daran anschließende Zwischenzone in Form eines sogenannten Maddock-Abschnitts der Länge 2,5 D zur Scherung von unaufgeschlossenen Mischungsbestandteilen sowie einer Ausstoßzone mit einer Mischelementanordnung der Länge 2,5 D, welche aus schräg versetzten Nocken als Dispergierhilfen bestand. Beschrieben ist diese Mischschnecke beispielsweise in der Zeitschrift Plastverarbeiter (23) 1972/10 S. 679.

Die Spritzgießversuche führte man bei einer Schneckendrehzahl von 200 min$^{-1}$, einem spezifischen Spritzdruck von 1626 bar und einer Zylindertemperatur von 200 ° C durch.

Die hergestellten Spritzgießteile zeigten, daß eine handelsübliche Mischschnecke nicht zur direkten Dispergierung von Additiven, wie Füllstoffen, geeignet ist. Die Spritzgießteile enthielten Füllstoffagglomerate mit Durchmessern bis zu mehreren Millimetern. Die Fertigteiloberfläche zeigte eine starke Schlierenbildung.

Der unter C. beschriebene Filtriertest durch ein Siebpaket ergab nach Tabelle 1, No. 1 schon bei der Extrusion einer entsprechenden Füllstoffmenge von 265 g (entsprechend nur 26,5 % der sonst für den Test eingesetzten Füllstoffmenge von 1'000 g) einen so hohen Druckanstieg (210 bar) vor dem Siebpaket, daß der Test abgebrochen werden mußte. Der Glührückstand auf dem Siebpaket betrug dabei 8670 mg.

Beispiel 2 :

Verarbeitung von CaCO$_3$ mit HDPE-masterbatch mittels einer Standard-Spritzgießschnecke.

Mineralfüllstoffe wie Calciumcarbonat oder Talk sowie Pigmente (TiO$_2$, Ruß) müssen nach dem Stand der Technik zuerst durch ein Compoundier- oder Masterbatchverfahren in entsprechenden Polymeren oder Wachsen dispergiert und granuliert werden, damit sie in den Thermoplasten außerhalb PVC im Spritzgießverfahren verarbeitet werden können. (Anschließend soll dann gezeigt werden, daß mit der erfindungsgemäßen Schnecke eine ähnliche Füllstoff- resp. Additivdispergierung bei direkter, pulverförmiger Zugabe unter Vermeidung der vorhergigen Masterbatch-resp. Compoundherstellung ermöglicht wird.)

Um den Stand der Technik zu zeigen, wurde ein handelsübliches Masterbatch-Granulat Typ Multibase HDPE 707 A der Fa. Multibase SA in F-38380 Saint-Laurent-du-Pont bestehend aus 70 Gew.-% eines Calciumcarbonates mit mittlerem statischen Teilchendurchmesser von 3,0 μm (Millicarb) und 30 Gew.-% HDPE verwendet. Der Schmelzindex des verwendeten HDPE betrug 7 (190 ° C, 2 kg). Das Masterbatch verdünnte man vor der Zugabe in den Trichter der Spritzgießmaschine mit reinem HDPE Hostalen GC 7260-GH Granulat der Hoechst AG auf eine Calciumcarbonatkonzentration von 20 Gew.-%. Die Maschinenbedingungen wurden wie in Beispiel 1 angegeben gewählt. Als Schnecke verwendete man eine üblicherweise für die Verarbeitung von Polyolefinen gebräuchliche Standardschnecke Art. No. 117.822.4586 mit einem Durchmesser von 70 mm und einem Länge zu Durchmesserverhältnis L/D von 25 der Fa. Netstal-Maschinen-fabrik.

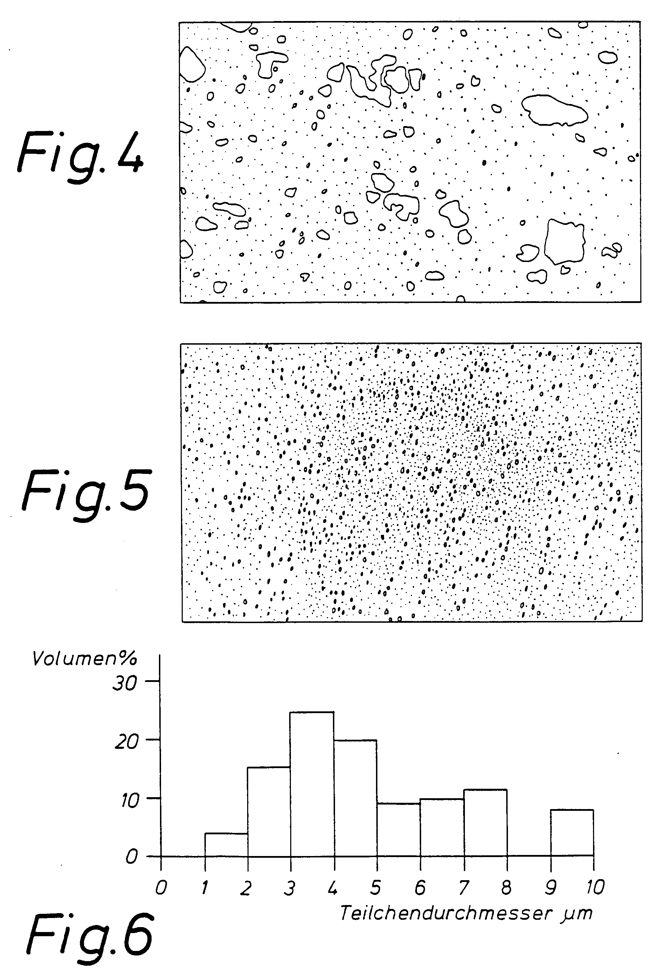

Fig. 4 zeigt REM-Aufnahmen von aus gespritzten Prüfkörpern herausgeschnittenen Proben bei eineß Vergrößerung von 1'600 ×. Es wurde das unter A. beschriebene Verfahren verwendet. Im Füllstoffmasterbatch sind eindeutige Agglomerate sichtbar.

Fig. 5 zeigt die unter B beschriebene Aufnahme mit dem optischen Mikroskop aus den gleichen Spritzgußtiefen wie Figur 4.

Fig. 6 zeigt das durch den Bildanalysator über eine Fläche von 10'000 $\mu m^2$ ausgewertete Histogramm der Figur 5, d.h. den Volumenanteil der Füllstoffteilchen bzw. Füllstoffagglomerate als Funktion des Teilchens- bzw. Agglomeratdurchmessers. Die gröbsten Teilchen haben einen Durchmesser von 10 $\mu m$.

Im unter C. beschriebenen Filtriertest durch das Siebpaket ergaben die gespritzten Teile nach Tabelle 1, No. 2 einen maximalen Siebrückstand nach dem Ausglühen von 147 mg aus 1'000 g durch das Siebpaket extrudiertem Millicarb.

Beispiel 3 :

Verarbeitung von Talk mit PP-Compound mittels einer Standard-Spritzgießschnecke.

Es wurde ein handelsübliches Compound Hostalen PPN 7190 TV 40 mit einem Füllgrad von 40 Gew.-% Talk der Hoechst AG D-Frankfurt-Hoechst gewählt. Maschine und Schnecke waren die gleichen wie in Beispiel 2 angegeben. Die Spritzbedingungen wurden wie in Beispiel 2 gewählt. Beispiel 3 in Tabelle 1 zeigt den Glührückstand und den Filtriertest mit den gespritzten Prüfkörpern.

Beispiel 4 :

Verarbeitung von TiO$_2$ Masterbatch mit PE-Granulat mittels einer Standard-Spritzgießschnecke.

Als typischen Vertreter für Pigment-Masterbatches wählte man das Remafin AEX 77 der Fa. Novacrome, I-22050 Lomagna mit 63 Gew.-% TiO$_2$ und 37 Gew.-% Polyethylenmatrix. Der Filtriertest durch das Siebpaket (ohne vorheriges Spritzen) ergab nach Tabelle 1, No. 4 eine sehr gute Pigmentverteilung mit einem Glührückstand auf dem Siebpaket von nur 45 mg.

Tabelle 1          Siebrückstand nach dem Stand der Technik

| No. | Verfahren / Bemerkung | Additiv-menge | Glührück-stand |
|---|---|---|---|
| | **1. Direktes Vermischen von 20 Gew.-%** | | |
| | **CaCO₃ mit 80 Gew.-% HDPE-Granulat** | | |
| 1 | Versuch abgebrochen nach Druckanstieg | | |
| | vor | 265 g | 8'670mg |
| | dem Siebpaket über 210 bar | | |
| | **2. Stand der Compoundier- und Masterbatch Technik** | | |
| | a) Masterbatch aus 70 Gew.-% CaCO₃ / | | |
| 2 | 30 Gew.-% HDPE mit HDPE verdünnt auf | | |
| | Füllgrad 20 Gew.-% CaCO₃ | 1'000g | 147 mg |
| | Druckanstieg vor dem Siebpaket | | |
| | max. 35 bar | | |
| | b) Compound aus 40 Gew.-% Talk / | | |
| 3 | 60 Gew.-% PP | 1'000g | 576 mg |
| | Druckanstieg auf dem Siebpaket | | |
| | max. 42 bar | | |
| | c) Weißpigment-Masterbatch aus | | |
| 4 | 63 Gew.-% TiO₂ / 37 Gew.-% PE | 1'000g | 45mg |
| | Druckanstieg vor dem Siebpaket | | |
| | max. 35 bar | | |

In den anschließenden Beispielen 5 - 15 wurde unter Verwendung der oben dargestellten Prüfungsverfahren A - C nach dem erfindungsgemäßen Verfahren bzw. mit der erfindungsgemäßen Schnecke erreichte Additivdispergierungen in Polymeren nach dem Spritzgießen untersucht.

Beispiel 5 :

Verarbeitung von $CaCO_3$-Füllstoff in HDPE-Granulat
Man wählte das in Beispiel 1 beschriebene System (20% Millicarb/80% HDPE) mit dem Unterschied, daß anstelle der standardmäßigen Mischschnecke die zum Patent angemeldete Mischschnecke 1 verwendet wurde. Die Spritzbedingungen wählte man in Beispiel 1. Füllstoffpulver und Polymergranulat dosierte man direkt in den Trichter der Spritzgießmaschine.

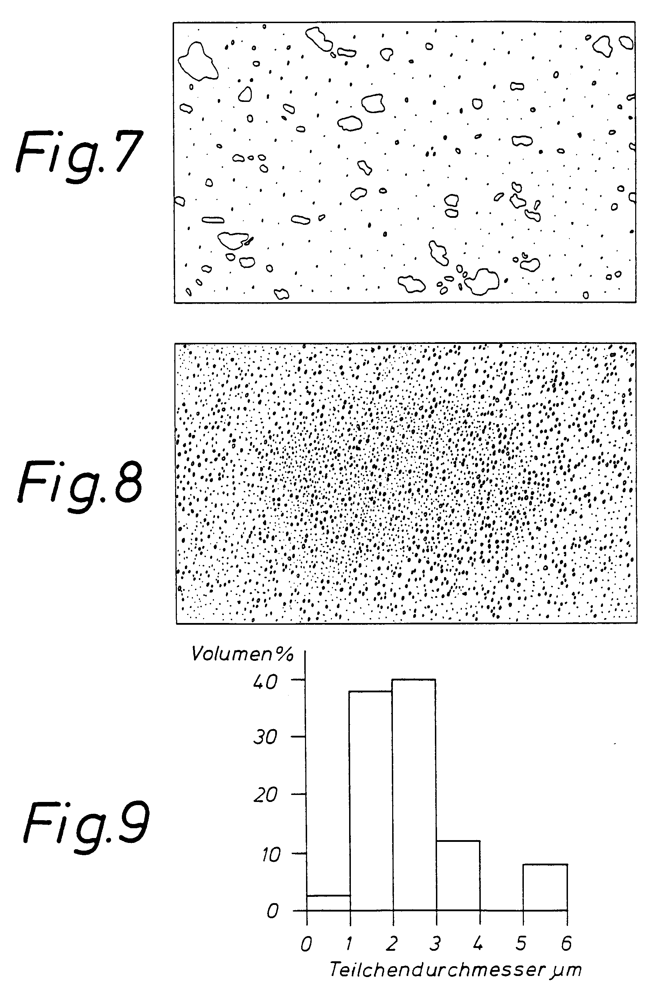

Fig. 7 zeigt eine REM-Aufnahme von einer aus einem gespritzten Prüfkörper herausgeschnittenen Probe bei einer Vergrößerung von 1'000 ×. Es wurde die unter A. beschriebene Methode verwendet. Ein Vergleich mit Fig. 4 zeigt, daß mit der zum Patent angemeldeten Mischschnecke mit scheibenförmigen, geschlitzten Mischern eine mindest so gute Additivdispergierung erzielt wird wie bei einem vorherigen Masterbatchschritt (beispiel 2).

Fig. 8 zeigt die beim Verfahren B. beschriebene mikroskopische Aufnahme aus den gleichen Spritzgießtiefen. Ein Vergleich mit Fig. 5 (Spritzgießen des gleichen Füllstoffes in Form eines Masterbatches) zeigt die ähnlich gute Dispergierwirkung der Mischschnecke bei der direkten pulverförmigen Zugabe des Füllstoffes zum HDPE-Granulat. Fig. 9 zeigt das zu Fig. 8 gehörende Histogramm der Volumenanteile der Füllstoffgranulate im Spritzgießteil. Der Vergleich der Histogramme in Fig. 9 und 6 zeigt, daß die gröbsten Agglomerate mit der Mischschnecke bei 6 $\mu$m liegen, mit dem Masterbatchverfahren jedoch bis 10 $\mu$m Durchmesser reichen.

Versuch No. 5 Tabelle 2 zeigt weiterhin, daß auch mit der Methode der Siebpakete eine ähnlich gute Additivdispergierung wie mit einem nach dem Stand der Technik hergestellten Masterbatch (No.2) nachgewiesen werden kann.

Beispiel 6 :

Verarbeitung von $CaCO_3$-Füllstoff in HDPE-Granulat.

In diesem Beispiels erhöhte man bei sonst gleichen Bedingungen wie in Beispiel 5 den Millicarb-Füllstoff dauf 30 Gew.-% bei 70 Gew.-% HDPE-Granulat. No. 6 in Tabelle 2 zeigt am Glührückstand , daß auch bei Erhöhung des Füllgrades um 50% (20 Gew.-% auf 30 Gew.-%) keine wesentiich erhöhte Füllstoff-Agglomeratbildung stattfindet.

Beispiel 7 :

Verarbeitung von $CaCO_3$ -Füllstoff in HDPE-Granulat.

In Versuch No. 7 wählte man ein feineres Calciumcarbonat (mittlerer Teilchendurchmesser 1,5 $\mu$m) mit Stearinsäure oberflächenbeschichtet Typ Omyalite 90 T der Fa. Plüss-Staufer AG, unter sonst gleichen Bedingungen wie im Beispiel 6. Nach den in der Polymertechnik mit Mineralfüllstoffen gemachten Erfahrungen wird speziell in unpolaren Polymeren wie Polyolefinen durch die Oberflächenbeschichtung der Füllstoffe eine bessere Dispergierung erzielt. Dies zeigt sich auch in Tabelle 2, Versuch 7, wo mit dem feinen, oberflächenbeschichteten $CaCO_3$ eine verbesserte Dispergierung (geringerer Glührückstand) als mit dem gröberen, unbeschichteten Calciumcarbonat (Millicarb) erzielt wird.

Beispiel 8 :

Verarbeitung von Calciumcarbonat-Füllstoff in Polypropylen-Granulat.

Als Mischschnecke verwendete man die als Mischschnecke 2 dargestellte Schnecke mit 70 mm Durchmesser, einem L/D-Verhältnis von 25 und dem in Beispiel 1 beschriebenen Maschinenbedingungen.

Der Millicarb-Füllstoff betrug 20 Gew.-% . Als Polypropylen verwendete man 80 Gew.-% Propathene GYM 45 der ICI, GB-Welwyn Garden City mit einem Schmelzindex von 14 bis 15 (230$^\circ$C / 2 kg). Es handelt sich um ein Homo-Polypropylen-Granulat.

Versuch No. 8 in Tabelle 2 zeigt, daß mit einem Glührückstand von nur 95 mg eine ausgezeichnete Füllstoffdispergierung erzielt wird.

Beispiel 9 :

Verarbeitung von Calciumcarbonat-Füllstoff in Polypropylen-Granulat.

Nach den in Beispiel 8 angegebenen Bedingungen erhöhte man den Millicarb-Füllgrad auf 30 Gew.-% . Die Dispergierung gemessen über den Siebrückstand in No. 9 ist etwas schlechter als bei niedrigerem Füllgrad, muß jedoch nach der Qualität der Fertigteiloberfläche noch als gut bezeichnet werden.

Beispiel 10 :

Verarbeiten von Calciumcarbonat-Füllstoff in Polystyrol und ABS.

30 Gew.-% Millicarb dispergierte man direkt in 70 Gew.-% Hostyren N 2000-Granulat der Fa. Hoechst AG mit der Mischschnecke 2 und den Bedingungen des Beispiels 8. Der Glührückstand nach No. 10 zeigt, daß die Redispergierung des Carbonates in Polystyrol mindestens so gut ist wie in HDPE.

Beispiel 11 :

Verarbeiten von Calciumcarbonat-Füllstoff in Polystyrol und ABS.

20 Gew.-% Omyalite 90 T dispergierte man wie in Beispiel 10 direkt mit der Mischsochnecke 2 in 80 Gew.-% ABS-Granulat (Lustran 240 der Fa. Monsanto, I-Mailand). Auch in diesem Polymeren wird nach dem Glührückstand No. 11 eine zugte Verteilung erzielt.

Beispiel 12 :

Verarbeitung von Talkum-Füllstoff in Polypropylen-Granulat.

Anstelle des in Beispiel 8 beschriebenen Calciumcarbonates setzte man hier unter sonst gleichen Bedingungen 20 Gew.-% gemahlenes Talkum Typ 00S mit mittlerem statischem Teilchendurchmesser von 10 $\mu$m der Fa. Talc de Luzenac, F 9250 Luzenac-sur Ariège ein. Versuch No. 12 zeigt eine ähnlich gute Redispergierung wie bei Versuch No. 3 nach dem aktuellen Stand der Technik (Vorcompoundierung der Talks mit PP).

Beispiel 13 :

Verarbeitung von Talkum-Füllstoff in Polypropylen-Granulat.

Unter den gleichen Bedingungen wie in Beispiel 12 erhöhte man den Talk-Füllgrad auf 40 Gew.-% . Auch damit erhält man mit der Mischschnecke 2 eine gute Füllstoffdispergierung (Filtriertest No. 13).

Beispiel 14 :

Verarbeiten von Farbpigmenten in Polyolefin-Granulat.

Hier dispergierte man direkt 5 Gew.-% $TiO_3$ (Tiona 472 der SMC Chemicals Ltd., GB-Grimsby) in 95 Gew.-% HDPE Hostalen GC 7260-Granulat unter den in Beispiel 5 angegebenen Bedingungen. Diese Pigmentkonzentration entspricht ungefähr der maximal beim Polyolefinspritzgießen eingesetzten Pigmentmenge. Der Glührückstand nach No. 14 zeigt eine ausgezeichnete Additivdispergierung, wenn man ihn mit dem als Stand der Technik ($TiO_2$-Masterbatch) geltende Glührückstand der No. 4 vergleicht.

Beispiel 15 :

Verarbeiten von Flammschutzmittel in Polyolefin-Granulat.

Als typisches Flammschutzmittel verwendet man 30 Gew.-% Aluminiumtrihydrat ($Al(OH)_3$), Martinal OL 104 der Fa. Martinswerk GmbH, D-5010 Bergheim. Es wurde direkt mit 70 Gew.-% HDPE nach Beispiel 6 zugemischt, jedoch bei 200 $^\circ$C Schneckenzylindertemperatur gespritzt. ($Al(OH)_3$ zersetzt sich oberhalb 200 $^\circ$C). Der Glührückstand des Versuches 13 ergibt auch für typische Flammschutzmittel eine ausgezeich-nete Dispergierung.

Tabelle 2        Siebrückstand mit der erfindungsgemäßen Schnecke mit Mischteilen

| No. | Verfahren / Bemerkung | Additiv-menge | Glührück-stand |
|---|---|---|---|
| | **1. Mischschnecke mit Calciumcarbonat in HDPE** | | |
| 5 | 20 Gew.-% Millicarb /80 Gew.-% HDPE | 1'000 g | 132 mg |
| 6 | 30 Gew.-% Millicarb /70 Gew.-% HDPE | 1'000 g | 166 mg |
| 7 | 30 Gew.-% Omyalite 90T /70Gew.-%HDPE | 1'000 g | 107 mg |
| | **2. Mischschnecke mit Calciumcarbonat in PP** | | |
| 8 | 20 Gew.-% Millicarb /80Gew.-% Homo-PP | 1'000 g | 95 mg |
| 9 | 30 Gew.-% Millicarb /70Gew.-% Homo-PP | 1'000 g | 240 mg |
| | **3. Mischschnecke mit Calciumcarbonat in Polystyrol und ABS** | | |
| 10 | 30 Gew.-% Millicarb /70 Gew.-% Poly-styrol | 1'000 g | 107 mg |
| 11 | 20 Gew.-% Omyalite 90T/ 80 Gew.-% ABS | 1'000 g | 184 mg |
| | **4. Andere Füllstoffe** | | |
| 12 | 20 Gew.-% Talk / 80 Gew.-% PP | 1'000 g | 642 mg |
| 13 | 40 Gew.-% Talk / 60 Gew.-% PP | 1'000 g | 705 mg |
| | **5. Pigmente** | | |
| 14 | 5 Gew.-% $TiO_2$ / 95 Gew.-% HDPE | 1'000 g | 15 mg |
| | **6. Flammschutzmittel** | | |
| 15 | 30 Gew.-% $Al(OH)_3$ / 70 Gew.-% HDPE | 1'000 g | 237 mg |

**Patentansprüche**

1. Verfahren zur Verarbeitung von Polymer mit pulverförmigen Additiven in einer Spritzgießmaschine, welche eine Schnecke mit einer Einzugszone mit einem konstanten Schneckenkerndurchmesser, eine Zwischenzone mit einem Verdichtungs- und Meteringabschnitt und einer Mischelementanordnung aufweist,
**dadurch gekennzeichnet,**
daß das Polymer und die pulverförmigen Additive ohne vorherige Aufarbeitung unmittelbar in die Einzugszone der Schnecke eingeführt werden; und
daß in der Einzugszone das Polymer mit den pulverförmigen Additiven wenigstens zweimal durchgemischt wird.

EP 0 276 390 B1

**2.** Verfahren nach Anspruch 1,
dadurch gekennzeichnet,
daß das Gemisch nach dem Metern in der Ausstoßzone zunächst entspannt und im Entspannungsbereich wiederum vor einem erneuten Verdichten durchgemischt wird.

**3.** Verfahren nach einem der vorangehenden Ansprüche,
dadurch gekennzeichnet,
daß die Arbeitslänge der Schnecke für die Verarbeitung mindestens auf das 19-fache des Schneckendurchmessers festgelegt wird.

**4.** Verfahren nach einem der vorangehenden Ansprüche,
dadurch gekennzeichnet,
daß das Durchmischen in der Einzugszone der Schnecke jeweils über eine etwa dem doppelten Schneckendurchmesser entsprechende Länge durchgeführt wird.

**5.** Verfahren nach einem der vorangehenden Ansprüche,
dadurch gekennzeichnet,
daß das Gemisch zwischen dem jeweiligen Mischen in der Einzugszone mit der Schnecke über eine etwa dem Schneckendurchmesser entsprechende Entfernung transportiert wird.

**6.** Verfahren nach einem der Ansprüche 2 - 5,
dadurch gekennzeichnet,
daß das Gemisch im Entspannungsbereich über eine etwa dem doppelten Schneckendurchmesser entsprechende Länge durchgemischt wird.

**7.** Verfahren nach einem der Ansprüche 2 - 6,
dadurch gekennzeichnet,
daß das Durchmischen vor dem Ende der Ausstoßzone etwa bis zu einer dem dreifachen Schneckendurchmesser entsprechenden Entfernung durchgeführt wird.

**8.** Schnecke für eine Spritzgießmaschine zur Verarbeitung von Polymer mit pulverförmigen Additiven,
bestehend aus
einer Einzugszone (A) mit einem konstanten Schneckenkerndurchmesser (E), einer Zwischenzone (B) mit einem Verdichtungs- und einem Meteringabschnitt, und aus einer Ausstoßzone (C) mit wenigstens einer Mischelementanordnung (17),
dadurch gekennzeichnet,
daß die Schnecke (10) in ihrer Einzugszone (A) wenigstens zwei Mischelementanordnungen (15, 16) besitzt.

**9.** Schnecke nach Anspruch 8,
dadurch gekennzeichnet,
daß ihre Arbeitslänge (L) für die Verarbeitung mindestens das 19-fache des Schneckendurchmessers (D) beträgt.

**10.** Schnecke nach Anspruch 9,
dadurch gekennzeichnet,
daß sich die Einzugszone (A) über eine Länge von etwa dem 11-fachen Schneckendurchmesser (D) erstreckt, daß sich die Zwischenzone (B) über eine Länge von etwa dem 3-fachen Schneckendurchmesser (D) erstreckt, und daß sich die Ausstoßzone (C) über eine Länge von etwa dem 6-fachen Schneckendurchmesser (D) erstreckt.

**11.** Schnecke nach Anspruch 10,
dadurch gekennzeichnet,
daß der Schneckendurchmesser (D) am Beginn der Ausstoßzone (C) von seinem großen Durchmesser (F) im Meteringabschnitt (20) der Zwischenzone (B) zunächst abrupt auf einen Schnekkenkerndurchmesser (G) verringert ist, der kleiner als der Schneckenkerndurchmesser (E) in der Einzugszone (A) ist und sich über einen die Mischelementanordnung (17) aufweisenden Abschnitt erstreckt, dessen Länge etwa dem 4-fachen Schnekkendurchmesser (D) entspricht, und daß sich der verringerte Schnecken-

12

kerndurchmesser (G) danach zu einem zweiten Meteringabschnitt (23) mit einem gröberen Schneckenkerndurchmesser (H) als dem des Meteringabschnitts (20) der Zwischenzone (B) erweitert.

**12.** Schnecke nach einem der Ansprüche 8 - 11,
dadurch gekennzeichnet,
daß jede Mischelementanordnung (15, 16, 17) aus voneinander beabstandeten Ringsegmentabschnitten besteht, wobei die Summe der im Schnitt gesehenen Durchlaßflächen zwischen jeweils zwei benachbarten Ringsegmentabschnitten größer oder gleich der im Längsschnitt gesehenen Querschnittsfläche zwischen zwei Schneckengängen ist.

**13.** Schnecke nach Anspruch 12,
dadurch gekennzeichnet,
daß die Ringsegmentabschnitte ein symmetrisches Profil aufweisen.

**14.** Schnecke nach Anspruch 12 oder 13,
dadurch gekennzeichnet,
daß die Ringsegmentabschnitte senkrecht zur Längsachse der Schnecke (10) in parallelen Gruppen angeordnet sind, wobei der seitliche Abstand nebeneinander in Richtung der Längsachse angeordneter Ringsegmentabschnitte etwa der Dicke der Ringsegmentabschnitte entspricht.

**15.** Schnecke nach Anspruch 12 oder 13,
dadurch gekennzeichnet,
daß die Ringsegmentabschnitte wendelförmig auf der Schnecke in parallelen Gruppen angeordnet sind, wobei der seitliche Abstand nebeneinander angeordneter Ringsegmentabschnitte etwa der Dicke der Ringsegmentabschnitte entspricht.

**16.** Schnecke nach einem der Ansprüche 8 - 14,
dadurch gekennzeichnet,
daß sich jede Mischelementanordnung (15, 16) in der Einzugszone (A) über eine Länge erstreckt, die etwa dem doppelten Schneckendurchmesser (D) entspricht.

**17.** Schnecke nach einem der Ansprüche 8 - 15,
dadurch gekennzeichnet,
daß die Mischelementanordnungen (15, 16) in der Einzugszone (A) voneinander um eine Entfernung beabstandet sind, die etwa dem Schneckendurchmesser (D) entspricht.

**18.** Schnecke nach einem der Ansprüche 8 - 16,
dadurch gekennzeichnet,
daß der Abstand der in Förderrichtung der Schnecke (10) vor der Zwischenzone (B) liegenden Mischelementanordnung (16) zu dem Verdichtungsabschnitt der Zwischenzone (B) etwa dem 1,5-fachen Schneckendurchmesser (D) entspricht.

**19.** Schnecke nach einem der Ansprüche 8 - 17,
dadurch gekennzeichnet,
daß der Abstand der in der Ausstoßzone angeordneten Mischelementanordnung (17), von deren Ende etwa dem dreifachen Schneckendurchmesser (D) entspricht.

**20.** Schnecke nach einem der Ansprüche 8 - 18,
dadurch gekennzeichnet,
daß sich die in der Ausstoßzone (C) vorgesehene Mischelementanordnung (17) über eine etwa dem doppelten Schneckendurchmesser (D) entsprechende Länge erstreckt.

**Claims**

**1.** Method for processing polymer with powdery additives in an injection moulding machine which comprises a worm with a draw-in zone having a constant worm core diameter, an intermediate zone having a condensing and metering section and a mixing element arrangement, characterised in that the polymer and the powdery additives are inserted directly into the draw-in zone of the worm without

EP 0 276 390 B1

previous preparations; and in that, in the draw-in zone, the polymer is thoroughly mixed at least twice with the powdery additives.

2. Method according to claim 1, characterised in that after metering the mixture is firstly relaxed and is thoroughly mixed again in the relaxing area before it is compressed again.

3. Method according to any one of the preceding claims, characterised in that the working length of the worm for the processing is set at at least 19 times the worm diameter.

4. Method according to any one of the preceding claims, characterised in that the thorough mixing in the draw-in zone of the worm is carried out over a length which is approximately double the worm diameter in each case.

5. Method according to any one of the preceding claims, characterised in that the mixture is transported with the worm between the respective mixing process in the draw-in zone over a distance which corresponds approximately to the worm diameter.

6. Method according to any one of claims 2 to 5, characterised in that the mixture is thoroughly mixed in the relaxing range over a length which is approximately double the worm diameter.

7. Method according to any one of claims 2 to 6, characterised in that the thorough mixing in front of the end of the discharge zone is carried out approximately to a distance which is three times the worm diameter.

8. Worm for an injection moulding machine for processing polymers with powdery additives comprising a draw-in zone (A) with a constant worm core diameter (E), an intermediate zone (B) with a compression section and metering section, and a discharge zone (C) with at least one mixing element arrangement (17), characterised in that the worm (10) comprises in its draw-in zone (A) at least two mixing element arrangements (15, 16).

9. Worm according to claim 8, characterised in that its working length (L) for processing is at least 19 times the worm diameter (D).

10. Worm according to claim 9, characterised in that the draw-in zone (A) extends over a length of approximately 11 times the worm diameter (D); in that the intermediate zone (B) extends over a length of approximately 3 times the worm diameter (D); and in that the discharge zone (C) extends over a length of approximately 6 times the worm diameter (D).

11. Worm according to claim 10, characterised in that, at the beginning of the discharge zone (C), the worm diameter (D) firstly is abruptly reduced from its large diameter (F) in the metering section (20) of the intermediate zone (B) to a worm core diameter (G) which is smaller than the worm core diameter (E) in the draw-in zone (A) and extends over a section which comprises the mixing element arrangement (17) and of which the length is approximately four times the worm diameter (D); and in that the reduced worm core diameter (G) then increases to form a second metering section (23) with a larger worm core diameter (H) than that of the metering section (20) of the intermediate zone (B).

12. Worm according to any one of claims 8 to 11, characterised in that each mixing element arrangement (15, 16, 17) consists of annular segment sections which are disposed at a distance from one another, wherein the sum of the passage surfaces viewed in section between two adjacent annular segment sections in each case is larger than or equal to the cross-sectional surface viewed in longitudinal section between two worm passages.

13. Worm according to claim 12, characterised in that the annular segment sections comprise a symmetrical profile.

14. Worm according to claim 12 or 13, characterised in that the annular segment sections are disposed perpendicular to the longitudinal axis of the worm (10) in parallel groups, wherein the lateral distance between annular segment sections which are disposed adjacent to one another in the direction of the

14

longitudinal axis corresponds approximately to the thickness of the annular segment sections.

15. Worm according to claim 12 or 13, charaterised in that the annular segment sections are disposed on the worm in parallel groups in a spiral manner, wherein the lateral distance between annular segment sections which are disposed adjacent one another corresponds approximately to the thickness of the annular segment sections.

16. Worm according to any one of claims 8 to 14, characterised in that each mixing element arrangement (15, 16) extends in the draw-in zone (A) over a length which is approximately double the worm diameter (D).

17. Worm according to any one of claims 8 to 15, characterised in that the mixing element arrangements (15, 16) are disposed in the draw-in zone (A) at a distance from one another which corresponds approximately to the worm diameter (D).

18. Worm according to any one of claims 8 to 16, characterised in that the distance between the mixing element arrangement (16), which lies in the delivery direction of the worm (10) in front of the intermediate zone (B), and the compression section of the intermediate zone (B) is approximately 1.5 times the worm diameter (D).

19. Worm according to any one of claims 8 to 17, characterised in that the distance between the mixing element arrangement (17), which is disposed in the discharge zone, and the end thereof is approximately three times the worm diameter (D).

20. Worm according to any one of claims 8 to 18, characterised in that the mixing element arrangement (17), which is provided in the discharge zone (C), extends over a length which is approximately double the worm diameter (D).

**Revendications**

1. Procédé pour incorporer des additifs pulvérulents dans un polymère, dans une presse d'injection qui comprend une vis sans fin comportant une zone d'alimentation, à diamètre constant de l'arbre de vis sans fin, et une zone intermédiaire présentant une section de compression et une section de fixation de débit, ainsi qu'un agencement d'éléments de mélange,
   caractérisé en ce que,
   sans préparation préalable, on introduit le polymère et les additifs pulvérulents directement dans la zone d'alimentation de la vis sans fin; et
   en ce qu'on mélange intimement au moins deux fois le polymère avec les additifs pulvérulents dans la zone d'alimentation.

2. Procédé suivant la revendication 1,
   caractérisé en ce qu'
   après la fixation du débit, on soumet d'abord le mélange à une détente dans la zone d'expulsion et, dans la zone de détente, on le mélange à nouveau intimement avant une nouvelle compression.

3. Procédé suivant l'une des revendications précédentes,
   caractérisé en ce qu'
   on fixe la longueur de travail de la vis sans fin correspondant à l'incorporation à au moins 19 fois le diamètre de la vis sans fin.

4. Procédé suivant l'une des revendications précédentes,
   caractérisé en ce qu'
   on exécute chaque fois le mélange intime, dans la zone d'alimentation de la vis sans fin, sur une longueur correspondant à peu près au double du diamètre de la vis sans fin.

5. Procédé suivant l'une des revendications précédentes,
   caractérisé en ce qu'
   entre les différentes opérations de mélange effectuées dans la zone d'alimentation, le mélange est transporté par la vis sans fin sur une distance correspondant à peu près au diamètre de la vis sans fin.

6. Procédé suivant l'une des revendications 2 à 5,
   caractérisé en ce que,
   dans la zone de détente, on mélange intimement le mélange sur une longueur correspondant à peu près au double du diamètre de la vis sans fin.

7. Procédé suivant l'une des revendications 2 à 6,
   caractérisé en ce que
   le mélange intime prévu avant l'extrémité de la zone d'expulsion est exécuté à peu près à une distance correspondant jusqu'à trois fois le diamètre de la vis sans fin.

8. Vis sans fin pour presse d'injection permettant d'incorporer des additifs pulvérulents dans un polymère, constituée d'une zone d'alimentation (A), à diamètre constant (E) de l'arbre de vis sans fin, d'une zone intermédiaire (B), présentant une section de compression et une section de fixation de débit, et d'une zone d'expulsion (C) présentant au moins un agencement d'éléments de mélange (17),
   caractérisée en ce que,
   dans sa zone d'alimentation (A), la vis sans fin (10) comporte au moins deux agencements d'éléments de mélange (15, 16).

9. Vis sans fin suivant la revendication 8,
   caractérisée en ce que
   sa longueur de travail (L) pour l'incorporation est égale à au moins 19 fois le diamètre (D) de la vis sans fin.

10. Vis sans fin suivant la revendication 9,
    caractérisée en ce que
    la zone d'alimentation (A) s'étend sur une longueur d'à peu prés 11 fois le diamètre (D) de la vis sans fin, en ce que la zone intermédiaire (B) s'étend sur une longueur d'à peu près 3 fois le diamètre (D) de la vis sans fin et en ce que la zone d'expulsion (C) s'étend sur une longueur d'a peu près 6 fois le diamètre (D) de la vis sans fin.

11. Vis sans fin suivant la revendication 10,
    caractérisée en ce qu'
    au début de la zone d'expulsion (C), le diamètre (D) de la vis sans fin diminue d'abord brusquement du grand diamètre (F) qu'elle présente dans la section de fixation de débit (20) de la zone intermédiaire (B) à un diamètre (G) de l'arbre de vis sans fin qui est inférieur au diamètre (E) de l'arbre de vis sans fin dans la zone d'alimentation (A), puis s'étend sur une section, comportant l'agencement d'éléments de mélange (17), dont la longueur correspond à peu près à 4 fois le diamètre (D) de la vis sans fin et en ce que le diamètre réduit (G) de l'arbre de vis sans fin croît ensuite de façon à former une seconde section de fixation de débit (23) dans laquelle le diamètre (H) de l'arbre de vis sans fin est supérieur à celui de la section de fixation de débit (20) de la zone intermédiaire (B).

12. Vis sans fin suivant l'une des revendications 8 à 11,
    caractérisée en ce que
    chaque agencement d'éléments de mélange (15, 16, 17) est constitué de segments annulaires espacés entre eux, la somme des aires de passage, vues en coupe, existant chaque fois entre deux segments annulaires voisins étant supérieure ou égale à l'aire transversale, vue en coupe longitudinale, existant entre deux filets de la vis sans fin.

13. Vis sans fin suivant la revendication 12,
    caractérisée en ce que
    les segments annulaires ont une forme profilée symétrique.

14. Vis sans fin suivant l'une des revendications 12 et 13,
    caractérisée en ce que
    les segments annulaires sont disposés en groupes parallèles perpendiculaires à l'axe longitudinal de la vis sans fin (10), l'espacement latéral des segments annulaires disposés côte à côte suivant la

EP 0 276 390 B1

direction de l'axe longitudinal correspondant à peu près à l'épaisseur de ces segments.

15. Vis sans fin suivant l'une des revendications 12 et 13,
   caractérisée en ce que
   les segments annulaires sont disposés de façon hélicoïdale en groupes parallèles sur la vis sans fin, l'espacement latéral des segments annulaires disposés côte à côte correspondant à peu près à l'épaisseur de ces segments.

16. Vis sans fin suivant l'une des revendications 8 a 14,
   caractérisée ce que
   chaque agencement d'éléments de mélange (15, 16) s'étend dans la zone d'alimentation (A) sur une longueur qui correspond à peu près au double du diamètre (D) de la vis sans fin.

17. Vis sans fin suivant l'une des revendications 8 à 15,
   caractérisée en ce que
   les agencements d'éléments de mélange (15, 16) présentent entre eux dans la zone d'alimentation (A) un espacement qui correspond à peu près au diamètre (D) de la vis sans fin.

18. Vis sans fin suivant l'une des revendications 8 à 16,
   caractérisée en ce que
   la distance dont l'agencement d'éléments de mélange (16) se trouvant en amont de la zone intermédiaire (B) suivant la direction de transport de la vis sans fin (10) est espacé de la section de compression de la zone intermédiaire (B) correspond à peu près à 1,5 fois le diamètre (D) de la vis sans fin.

19. Vis sans fin suivant l'une des revendications 8 à 17,
   caractérisée en ce que
   la distance dont l'agencement d'éléments de mélange (17) disposé dans la zone d'expulsion est espacé de l'extrémité de cette dernière correspond à peu près à trois fois le diamètre (D) de la vis sans fin.

20. Vis sans fin suivant l'une des revendications 8 à 18,
   caractérisée en ce que
   l'agencement d'éléments de mélange (17) situé dans la zone d'expulsion (C) s'étend sur une longueur correspondant à peu près au double du diamètre (D) de la vis sans fin.

17

Fig.1

EP 0 276 390 B1

Fig.2

Fig.3

19

Fig.4

Fig.5

Fig.6

*Fig.7*

*Fig.8*

*Fig.9*